# EUROPEAN PATENT APPLICATION

(11) **EP 4 023 105 A1**
(43) Date of publication of application: **06.07.2022**
(21) Application number: 21217688.7
(22) Date of filing: 24.12.2021
(51) Int. Cl.: A45F 5/00, A41D 13/08, G06F 3/033

(54) **A TOUCHSCREEN CONTACT SAFETY DEVICE**

(30) Priority: 31.12.2020 GB 202020935
(71) Applicant: McDonnell, Marie, Whitefield Manchester Lancashire M45 8JJ (GB)
(72) Inventor: McDonnell, Marie, Whitefield Manchester Lancashire M45 8JJ (GB)
(74) Representative: Wilson Gunn

(57) **Abstract**

A touchscreen contact safety device comprises a carrier (3), a carrying means (1, 2) and a digit cover (30), wherein the carrier is attached to the carrying means which allows carriage of the device by a user, the carrier comprising a container (9) defining an opening and an internal volume for receipt of the cover, and the digit cover has an opening to a cover portion to cover the user's digit in use and arranged to locate in the carrier in carriage, wherein the digit cover is sized relative to the internal volume to retain the opening of the digit cover oriented toward the opening of the container.

## Description

### Field of the Invention

The present invention relates to a touchscreen contact safety device, in particular a device for providing safety to users who are required to interact with multiple user interfaces such as buttons, public touchscreen interfaces.

### Background to the Invention

Increasing numbers of people in many societies are concerned about transference of germs, bacteria or viruses.

However at the same time many people in increasing numbers of societies are reliant on technology, for example touchscreen electronic interfaces, digital money equipment and other multiple user interfaces requiring physical interaction such as buttons or lifts or similar.

This can be problematic as an individual user's gloves will simply transfer germs, bacteria or viruses eventually in the same way as hands, and may not allow interaction with touchscreens. Alternatively or additionally overuse of antibacterials or handwashing can be detrimental to society.

### Prior Art

US 2012 0 222 186 (VENA) discloses a finger grip for providing protection to the fingertip or finger and also enhancing the grip of the user, the finger grip having a flexible resilient sheath having a first open end and a second closed tip end, the finger grip being formed of a predetermined length for encapsulating the fingertip or the finger, the finger grip being perforated or imperforate and capable of being coated with an adhesive or anti-bacterial, depending upon the intended use.

US 2013 0 061 364 (ROBB) discloses an inexpensive, practical hygienic finger protector is provided, which includes a tubular sheath having a proximal open end and a distal closed end. The open end is adapted to receive a human finger to approximately the first joint with the tip of the finger, when inserted, abutting the closed end. The finger protector further includes a knob like protuberance imbedded into the closed end of the sheath, disposed below the downward-facing fingertip of the inserted finger. The finger protector guards against contamination by dirt or microorganisms, while allowing the wearer to input data or signatures into public data input devices such as keypads or s keypads, card readers, and signature recorders.

Optionally aspects, including a keychain attachment, embedded data storage, and aesthetic cut-outs are presented.

US 2012 0 266 345 (SHAMBAYATI) discloses a device comprises finger tip covers comprised of soft, thin material for the fingers and thumb, for use with touch-display screens, both as a fashion accessory and as a functional accessory to minimize the transmission of dirt, germs, and bacteria among users.

The present invention arose in order to overcome problems suffered by existing devices.

### Summary of the Invention

According to the present invention there is provided a touchscreen contact safety device comprises a carrier, a carrying means and a digit cover, wherein the carrier is attached to the carrying means which allows carriage of the device by a user, and the digit cover is to cover the user's digit in use and arranged to locate in the carrier in carriage.

It may be envisaged that the digit cover is formed in a material that enables use of a touchscreen, allowing utilisation of the device whenever a user is required to either press a button, or interact with a touchscreen.

The material may be electrically conductive silicone, or similar. The material may include an electrically conductive wire.

The carrier may comprise a container for the digit cover.

Such container may be envisaged to be easily closed and opened, such that in use the digit cover may be removed from the container for usage, but otherwise may be within the container.

The carrier therefore provides an internal volume for the digit cover and may provide a sealing means around the internal volume.

In some embodiments the internal volume is accessed through a displaceable part. In some embodiments the displaceable part provides a reversible part, for example such that the digit cover is pushed from the internal volume for example by pushing the part inside out.

In some embodiments the displaceable part may comprise a cap or lid. In some such embodiments the lid may be tolerance, interference or friction fit for ease of displacement, and may include a hinge to the internal volume. This may advantageously enable the user to flip open the carrier with one hand to access the cover.

In some embodiments the lid provides a part of the internal volume, such that the cover fits within the container and lid, and so is more readily available when the carrier is opened.

The carrying means may comprise an elongate member, for example cord or wire.

The carrying means may comprise a clip means, for example carabiner.

The carrying means may comprise a sprung reel so as to for example enable extension of the carrier from the user, and/or cover from the carrier so as to provide easier access and use as required.

The digit cover may comprise a concave puncture-resistant member adapted to protect a pulp of a digit. The puncture resistant material may be thin and flexible to avoid interfering with tactile sensation of the digit.

The concave member may have an adhesive layer adapted to adhere to the digit and a first end extending over the pulp of the digit to just below a nail, a second end extending over the pulp of the digit below a first joint of the digit, and a lateral and medial edges extending along the digit and may be adapted to be worn on a digit, and extends along the palmar surface of the digit below the distal interphalangeal joint.

The digit cover may treated with an antimicrobial, antifungal and/or antiviral agent. The digit cover may provide raised nodes on its outer surface so as to minimise contact surface and thereby reduce cross-contamination opportunities.

In some embodiments the digit cover may be envisaged to be connected to the carrier, and/or carrying means, such that the digit cover is displaceable from the carrier for example, on a cord.

In other embodiments the digit cover may be wholly separable from the carrier in use.

A preferred embodiment of the invention will now be described by way of example only and with reference to the Figures in which:

### Brief Description of Figures

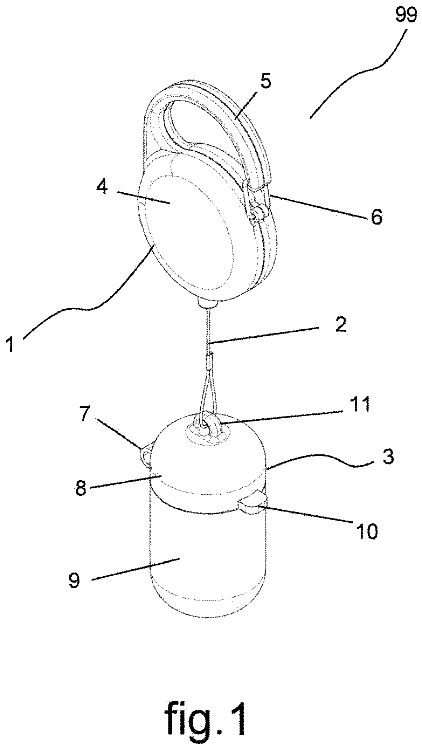

Figure 1 shows an isometric view of an embodiment of the device according to the present invention with the carrier in a first closed position;

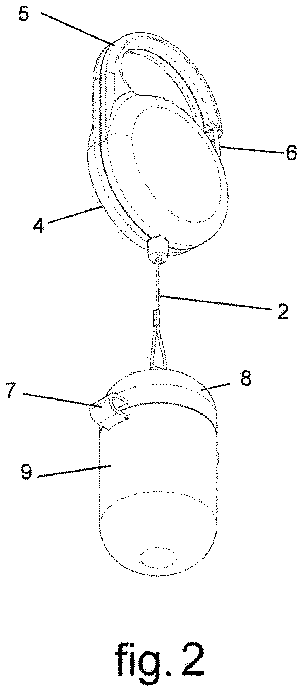

Figure 2 shows a reverse isometric view of the embodiment of the device shown in Figure 1;

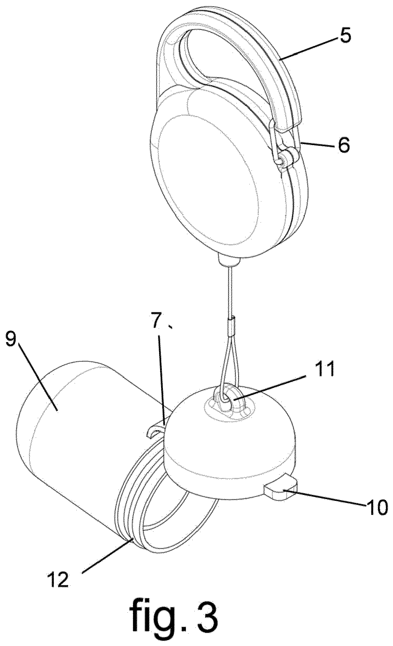

Figure 3 shows an isometric view of the embodiment of the device shown in Figure 1, with the carrier in an open second position;

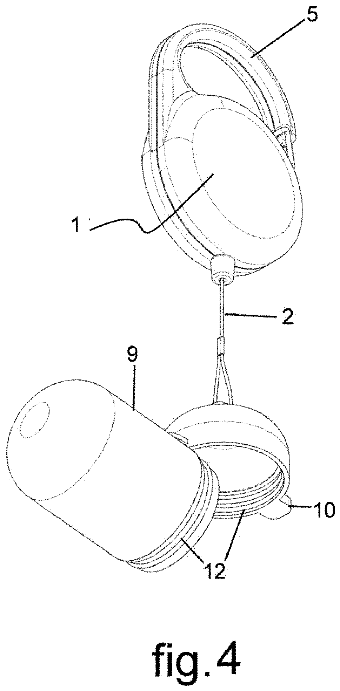

Figure 4 shows a reverse isometric view of the embodiment of the device as shown in Figure 3;

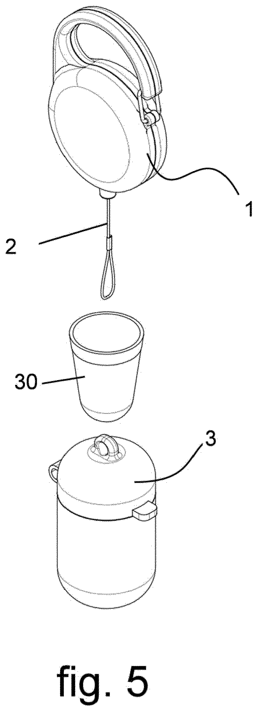

Figure 5 shows an isometric exploded view of the embodiment of the device shown in Figure 1;
   And

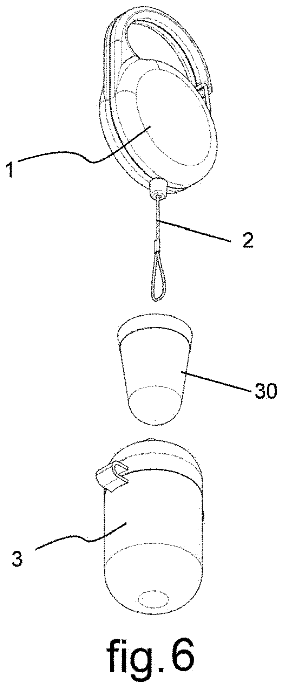

Figure 6 shows a reverse isometric exploded view of the embodiment of the device shown in Figure 1.

### Detailed Description of Figures

With reference to the figures there is shown an embodiment of a device generally comprising a touchscreen contact safety device 99 comprises a carrier 3, a carrying means 1,2 and a digit cover 30, wherein the carrier 3 is attached to the carrying means 1,2 which allows carriage of the device by a user, and the digit cover 30 is to cover the user's digit in use and arranged to locate in the carrier 3 in carriage.

In particular reference to the embodiment shown in the Figures the embodiment comprises a carrying means provided in part by an extensible cord 1, which is arranged to extend from a sprung reel, which reel is provided within a housing 1 that includes a handle 5 and a sprung gate 6.

The handle 5 extends above the housing 1 and defines a space which can be used to hang the embodiment on a belt hoop or similar, which space is closed by the sprung gate 6.

The carrier 3 comprises a container 9 with a tolerance fitting lid 8. The container has a rounded bottom end, and the lid has a rounded top end. The top end has a topmost lanyard attachment point 11 for fixed attachment of the cord 2.

The top has a hinge 7 on one side and an extending tab 10 on the other side, which tab can be used to displace the lid, so as to flip open to access the container's internal volume, and the cover.

The lid and container provide an entrance to the internal volume at an intermediate height of the carrier.

The digit cover 30 is wholly displaceable from and separate to the carrier, such that it may be easily and frequently replaced or cleaned to minimise cross-contamination potential.

The lid is attached to the container by a living hinge 7.

The invention has been described by way of examples only and it will be appreciated that variation may be made to the above-mentioned embodiments without departing from the scope of invention as defined by the claims, in particular but not solely combination of features of described embodiments.

## Claims

1. A touchscreen contact safety device comprises a carrier, a carrying means and a digit cover, wherein the carrier is attached to the carrying means which allows carriage of the device by a user, and the digit cover is to cover the user's digit in use and arranged to locate in the carrier in carriage.

2. A device according to claim 1 wherein the carrier comprises a container defining an internal volume for receipt of the .cover.

3. A device according to claim 1 or 2 wherein the cover is wholly displaceable from the carrier.

4. A device according to any preceding claim wherein the carrying means comprises an elongate member.

5. A device according to claim 4 wherein the carrying means comprises a sprung reel.

6. A device according to any of the preceding claims wherein the cover is formed in an electrically conductive material.

7. A device according to any of preceding claims 1 to 5 wherein the cover includes an electrically conductive wire.
